(19) Europäisches Patentamt
European Patent Office
Office européen des brevets

(11) **EP 3 421 191 A1**

(12) **EUROPÄISCHE PATENTANMELDUNG**

(43) Veröffentlichungstag:
**02.01.2019  Patentblatt 2019/01**

(51) Int Cl.:
**B25J 9/16** *(2006.01)*  **G01S 17/42** *(2006.01)*
**G01S 17/89** *(2006.01)*

(21) Anmeldenummer: **18170726.6**

(22) Anmeldetag: **04.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **28.06.2017  EP 17178332**

(71) Anmelder: **Sick AG**
**79183 Waldkirch (DE)**

(72) Erfinder:
• **Neubauer, Matthias**
  **79102 Freiburg (DE)**
• **Hornung, Armin**
  **79312 Emmendingen (DE)**

(54) **SENSOR ZUM ABSICHERN EINER MASCHINE**

(57)    Es wird ein sicherer optoelektronischer Sensor (10) zum Absichern eines Überwachungsbereichs (12) mit mindestens einer Maschine (26) angegeben, die eine Gefahrenstelle (26a-b) bildet, wobei der Sensor (10) einen Lichtempfänger (16a-b) zum Erzeugen eines Empfangssignals aus Empfangslicht aus dem Überwachungsbereich (12), eine Steuer- und Auswertungseinheit (24) zum Erfassen von Objektpositionen (28) in dem Überwachungsbereich (12) aus dem Empfangssignal sowie eine sichere Ausgabeschnittstelle (30) für aus den Objektpositionen (28) gewonnene Informationen aufweist. Dabei ist die Steuer- und Auswertungseinheit (24) dafür ausgebildet, den kürzesten Abstand zwischen Gefahrenstelle (26a-b) und Objektpositionen (28) zu bestimmen und an der sicheren Ausgabeschnittstelle (30) bereitzustellen.

Figur 2

EP 3 421 191 A1

**Beschreibung**

Die Erfindung betrifft einen sicheren optoelektronischen Sensor, insbesondere eine 3D-Kamera, zum Absichern eines Überwachungsbereichs mit mindestens einer Maschine sowie ein entsprechendes Verfahren nach dem Oberbegriff von Anspruch 1 beziehungsweise 14.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

In der sicherheitstechnischen Überwachung von Robotern besteht ein zunehmender Wunsch nach engerer Zusammenarbeit mit Personen (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Schutzfelder und Sicherheitsabstände möglichst klein und eventuell sogar situationsangepasst konfiguriert werden, natürlich unter der Vorgabe, dass die Sicherheit gewährleistet bleibt. Die Normen ISO13854, ISO 13855, ISO 13857 befassen sich mit der Festlegung von Sicherheitsabständen.

Eine Bewertung von Objekten und Maschinen bezüglich Geschwindigkeit und gegenseitiger Entfernung wird in den genannten Robroternormen als "Speed and Separation Monitoring" bezeichnet. Sichere überwachende Sensoren, wie Laserscanner oder 3D-Kameras, unterstützen das aber nicht. Sie arbeiten weiterhin mit den üblichen Schutzfeldern, und sie liefern nur ein binäres Abschaltsignal, ob ein Schutzfeld verletzt ist oder nicht. Zwar ist die Sicherheit auf diese Weise gewährleistet, aber nicht besonders flexibel und auch häufig mit unnötigen Sicherheitszuschlägen und damit Einschränkungen der Verfügbarkeit, da die Schutzfelder für worst-case-Szenarien und nicht die tatsächliche aktuelle Situation konfiguriert sind.

Die EP 2 023 160 B1 befasst sich mit der Konfiguration von Schutzfeldern im dreidimensionalen Raum. Damit wird zwar eine intuitive und besonders gut angepasste Definition von Schutzfeldern möglich, aber der Sicherheitsansatz an sich bleibt derselbe.

Um die Flexibilität zu erhöhen, werden beispielsweise in der DE 101 52 543 A1 oder DE 10 2004 043 514 A1 dynamische Schutzfelder vorgeschlagen, deren Geometrie in Abhängigkeit von Maschinen- oder Objektbewegungen verändert wird. Auch in der EP 2 395 274 B1 werden Richtung und Geschwindigkeit von Objekten bestimmt, um ein Schutzfeld daran anzupassen. Die DE 10 2012 007 242 A1 überwacht die Umgebung eines Roboters und verändert ein hier Gefahrenbereich genanntes Schutzfeld in Abhängigkeit von Eigenschaften der erfassten Objekte. Alle diese Ansätze mit dynamischen Schutzfeldern schaffen zwar mehr Flexibilität, es ist aber eine komplexe Aufgabe, jeweils aktuelle passende Schutzfeldkonfigurationen auf sichere Weise zu bestimmen. Außerdem ändert es natürlich nichts an dem grundlegenden Schutzfeldprinzip, das für eine enge Mensch-Roboter-Kooperation nur begrenzt geeignet ist.

Die EP 2 819 109 A1 offenbart beispielsweise einen 3D-Sensor, der Objekte ab einer Mindestgröße in einem Detektionsfeld erkennt. Um die projektive Geometrie einer Stereokamera korrekt zu berücksichtigen, werden Bereiche der Tiefenkarte mit passend gewählten Schablonen verglichen. Allerdings erfolgt hier die Objekterkennung in direkter Verknüpfung mit Detektionsfeldern. Objekte außerhalb von Detektionsfeldern werden ignoriert. Für ein nicht auf Schutzfeldern basierendes Sicherheitskonzept ist das demnach ungeeignet.

Über die reine Objekterkennung hinaus muss auch bewertet werden, ob sich die Objekte in gefährlicher Nähe zu der überwachten Maschine befinden. Das ist wegen der zusätzlichen Tiefendimension und Abschattungseffekten ein anspruchsvolles Problem.

Die Arbeit von Flacco, Fabrizio, et al. "A depth space approach to human-robot collision avoidance." Robotics and Automation (ICRA), 2012 IEEE International Conference on. IEEE, 2012 berechnet den Abstand zu einem Roboter ausgehend von Tiefenkarten. Dabei wird auch die Verdeckung durch Objekte benannt, allerdings die Verdeckung durch den Roboter selbst nicht berücksichtigt. Außerdem bleibt die Abstandsberechnung ungenau, weil zur Vereinfachung mit Punktstrahlen ohne Ausdehnung gearbeitet wird. Wenn das detektierte Objekt näher an der Kamera ist als der Roboter, wird der Abstand in derselben Tiefenebene und folglich nur zweidimensional berechnet. Damit wird besonders bei großen Öffnungswinkeln und in Bereichen am Bildrand der Abstand überschätzt, und eine sichere Reaktion ist deshalb nicht gewährleistet.

Täubig, Holger, Berthold Bäuml, and Udo Frese. "Real-time swept volume and distance computation for self collision detection." Intelligent Robots and Systems (IROS), 2011 IEEE/RSJ International Conference on. IEEE, 2011 berechnen für Kugelschweif-Geometrien ("sphere-swept volumes") die konvexe Hülle von verschiedenen Teilen eines Roboters in Bewegung. Über den Abstand der Volumina zueinander wird erkannt, ob der Roboter mit sich selbst oder anderen Maschinenteilen kollidieren würde, um dann einen Halt auszulösen. Mit einer Kollisionserkennung oder Abstandsberechnung zu Objekten oder Personen in der Umgebung des Roboters befasst sich diese Arbeit nicht, und außerdem bleibt die projektive Verdeckung in der Kamerageometrie beziehungsweise den damit erfassten Tiefenkarten berücksichtigt. Entsprechendes offenbart die zugehörige WO 2010/085 944 A1.

Lenz, Claus, et al. "Fusing multiple kinects to survey shared human-robot-workspaces." Technische Universität München, Munich, Germany, Tech. Rep. TUM-I1214 (2012) beschreiben ein System zur Sensordatenfusion mehrerer Tiefenkameras. Aus deren Tiefenkarten werden Vordergrundbereiche extrahiert, die Punktwolken fusioniert und schließlich daraus Voxel im Raum berechnet, die zu Objekten geclustert werden. Es werden allerdings nur die sichtbaren Objektoberflächen verarbeitet. Nicht sichtbare Bereiche werden als frei angenommen und nicht weiter berücksichtigt.

Ebenso wird in Miseikis, Justinas, et al. "Multi 3D Camera Mapping for Predictive and Reflexive Robot Manipulator Trajectory Estimation." arXiv preprint arXiv:1610.03646 (2016) eine Kollisionskarte im Voxelraum aus den Daten mehrerer Sensoren gebildet, damit erforderlichenfalls ein Roboter ausweicht. Erneut bleibt die projektive Verdeckung unberücksichtigt.

In der Arbeit von Zube, Angelika, "Combined workspace monitoring and collision avoidance for mobile manipulators", 2015 IEEE 20th Conference on Emerging Technologies & Factory Automation (ETFA) werden die Informationen mehrerer Tiefensensoren fusioniert. Die Robotergeometrie einerseits und die von Hindernissen eingenommenen und verdeckten Bereiche andererseits werden durch Kugeln modelliert, zwischen denen ein Sicherheitsabstand eingehalten werden muss.

Aus der EP 2 947 604 A1 ist ein industrielles Sicherheitssystem bekannt, bei dem eine Lichtlaufzeitkamera 3D-Bilddaten aufnimmt. Darin erfasste Objekte werden auf eine XY-Ebene projiziert, und dort wird deren Abstand bestimmt. In einer weiteren Ausführungsform werden Objekt und Roboter jeweils mit einem einfachen 3D-Körper umgeben, etwa einem Ellipsoid, und dann wird der Abstand zwischen den Umhüllenden berechnet.

In der DE 10 2016 004 902 A1 werden kinematische Parameter in einer Umgebung eines Roboters bestimmt, um ein Kollisionsrisiko zu reduzieren. Dazu wird die voraussichtliche Bewegung eines Objekts in den Arbeitsraum des Roboters prognostiziert. Dies lässt die größte und damit sicherheitsrelevante momentane Gefahr insbesondere bei mehreren Objekten erst nach einigem Auswertungsaufwand erkennen. Durch Verwendung einer einfachen Kinect-Kamera ist auch keine normgerechte Sicherheit erreicht.

Die DE 20 2013 104 860 U1 offenbart eine Arbeitsvorrichtung mit einem Industrieroboter, bei der ein zusätzlicher Sensor einen Abstand zwischen Roboter und einem Hindernis bestimmt und daraus eine Kollisionsgefahr ermittelt wird. Es wird nicht erläutert, wann ein Hindernis beispielsweise aufgrund seiner Größe oder anderer Eigenschaften als sicherheitsrelevant anzusehen ist, insbesondere im Falle mehrerer Objekte, die der zusätzliche Sensor erfasst.

Die EP 2 386 876 B1 befasst sich mit einem sicheren Laserscanner, dessen Schutzfeldgrenzen aus einem Polygonzug konfiguriert sind. Der Laserscanner berechnet für außerhalb von Schutzfeldern erfasste Objekte deren Abstand zu jeder Kante des Polygons, um gegebenenfalls eine Warnung auszugeben, dass ein Schutzfeldeingriff droht. Das ist folglich kein Ersatz für Schutzfelder, sondern eine Ergänzung, die zuvor durch vorgelagerte Warnfelder erreicht wurde. Die eigentliche Sicherheitsfunktion dieses Laserscanners beruht weiterhin ausschließlich auf einer Schutzfeldüberwachung.

In der US 8 249 747 B2 werden Karten von Roboter und Mensch mit Risikofaktoren erstellt. Damit kann bewertet werden, wie drastisch die Folgen eines Unfalls bei Kollision eines bestimmten Bereichs eines Roboters mit einem bestimmten Bereich eines Menschen wäre. Mit solchen Risikoprofilen soll dann die Robotersteuerung aufgrund von aktuellen Sensordaten besonders gefährliche Unfälle vermeiden. Üblicherweise hat aber eine Absicherung den Anspruch, Kollisionen gänzlich zu verhindern und nicht nur schwere Verletzungen unwahrscheinlicher zu machen.

Nach der US 9 043 025 B2 reduziert ein Roboter seine Arbeitsgeschwindigkeit, wenn sich ein Objekt in einem umgebenden Erfassungsbereich befindet. Letztlich ist damit der Erfassungsbereich eine Art Schutzfeld mit einer milderen Reaktion auf eine Schutzfeldverletzung, die nicht in einer sicherheitsgerichteten Abschaltung, sondern nur einer langsameren Arbeitsgeschwindigkeit mündet.

Die US 2015/0217455 A1 offenbart eine Robotersteuerung bei Anwesenheit beweglicher Objekte. Mittels einer 3D-Kamera wird die Umgebung des Roboters beobachtet, um über mehrere Frames hinweg unerwartete bewegliche Objekte zu identifizieren. Wird ein unerwartetes Objekt in einem Gefahrenbereich erkannt, so reagiert die Robotersteuerung, um einen Unfall zu vermeiden. Es ist ausgesprochen komplex, bewegliche Objekte zu identifizieren und von erwarteten Objekten zu unterscheiden, und das Dokument geht überhaupt nicht darauf ein, wie eine solche Auswertung mit den einschlägigen Sicherheitsnormen vereinbar werden könnte.

Es ist daher Aufgabe der Erfindung, die Überwachung einer Maschine insbesondere auf Grundlage von 3D-Bilddaten zu verbessern.

Diese Aufgabe wird durch einen sicheren optoelektronischen Sensor zum Absichern eines Überwachungsbereichs mit mindestens einer Maschine, die eine Gefahrenstelle bildet, sowie ein entsprechendes Verfahren nach Anspruch 1 beziehungsweise 14 gelöst. Der Sensor ist sicher, also für eine sicherheitstechnische Anwendung ausgelegt, und erfüllt dafür die einleitend genannten oder entsprechende Normen, um eine gefahrbringende Maschine abzusichern. Mit einem Lichtempfänger wird Empfangslicht aus dem Überwachungsbereich erfasst und daraus ein Empfangssignal gewonnen. Die Ausgestaltung des Lichtempfängers und damit die Art des Empfangssignals hängen von dem Sensor ab. Beispielsweise ist der Lichtempfänger ein Bildsensor, und die aus den Pixeln ausgelesenen Informationen werden summarisch als Empfangssignal bezeichnet. Das Empfangssignal wird in dem Sensor ausgewertet, um Objektpositionen zu erfassen. Objektpositionen sind hier allgemein als Punkte eines Objekts zu verstehen, nicht nur eine Position je Objekt, also beispielsweise eine Wolke von Messpunkten, insbesondere eine 3D-Punktewolke, oder eine Tiefenkarte. Der Sensor weist außerdem eine ebenfalls im Sinne der genannten oder vergleichbarer Normen sichere Ausgabeschnittstelle auf, um aus den Objektpositionen gewonnene Informationen bereitzustellen. Herkömmlich wird über eine solche Ausgabeschnittstelle nur ein binäres Signal ausgegeben, ob eine Schutzfeldverletzung vorliegt (OSSD, Output Signal Switching Device).

Die Erfindung geht nun von dem Grundgedanken aus, nicht mehr Schutzfelder zu überwachen und auch nicht mehr selbst ein binäres Absicherungssignal zu erzeugen und auszugeben. Stattdessen wird die dafür erforderliche Information sicher, sehr kompakt und leicht zugänglich bereitgestellt. Dazu wird der kürzeste Abstand zwischen Gefahrenstelle und den erfassten Objektpositionen bestimmt. Das berücksichtigt alle Objekte in dem Überwachungsbereich, es wird folglich der Abstand zum nächsten Punkt des nächsten Objekts ermittelt. Der Überwachungsbereich muss dabei nicht mit dem maximalen Erfassungsbereich des Sensors übereinstimmen, sondern kann auf einen konfigurierten Arbeitsbereich beschränkt sein. Der jeweils aktuelle kürzeste Abstand wird anstelle des bisher üblichen binären Absicherungssignals an der folglich nicht mehr als OSSD ausgestalteten sicheren Ausgabeschnittstelle für eine angeschlossene Steuerung zur Verfügung gestellt. Diese Steuerung, etwa die übergeordnete Steuerung einer Roboterzelle oder auch die Steuerung des Roboters selbst, kann anhand des kürzesten Abstands sehr einfach feststellen, ob eine Gefahr besteht, und übernimmt die eigentliche Absicherungsfunktion selbst.

Die Erfindung hat den Vorteil, dass eine effiziente Schnittstelle zwischen dem Sensor und damit der Objekterkennung und der überwachten Maschine zu deren Absicherung geschaffen ist, welche die Sicherheit für Menschen zu jeder Zeit gewährleistet. Die Schnittstelle braucht nur sehr wenig Bandbreite, da lediglich ein Abstandswert je Gefahrenstelle zu übertragen ist. Vorzugsweise kann sogar nur immer dann ein Abstandswert übertragen werden, wenn es Änderungen gibt. Es ist problemlos möglich, eine solche Schnittstelle gemäß bestehenden sicheren industriellen Feldbusprotokollen mit heutigen Industrierobotern umzusetzen, die mit hohen Datenraten etwa zur Übermittlung von 3D-Punktwolken völlig überfordert wären.

Dabei wird das Arbeiten beziehungsweise die Kooperation mit Maschinen wesentlich flexibler gestaltbar und eine rasche, individuelle Reaktion auf Menschen im Umfeld der Maschine ermöglicht. Ein Eingriff in ein Schutzfeld lässt in der Regel nur noch einen Nothalt zu, da Schutzfelder gerade so definiert sind, dass in einem solchen Fall eine aufgrund des binären Abschaltsignals nicht mehr differenzierte Unfallgefahr besteht. Durch Überwachung von kürzesten Abständen sind jedoch auch mildere Eingriffe in den Prozessablauf möglich, die einen zeitaufwändigen Nothalt samt Wiederanlauf vermeiden und den Prozessablauf nach Möglichkeit ungestört weiterlaufen lassen oder die Annäherung eines Menschen in den Prozessablauf integrieren. Arbeitsschritte der Maschine können dabei rechtzeitig umgeplant werden. Verlorene Flächen, die aus Sicherheitsgründen nicht benutzbar sind, also herkömmlich die Schutzfelder und davon eingeschlossene Bereiche, werden minimiert, was zu erheblichen Einsparungen und einer wesentlich engeren Mensch-Maschine-Kooperation führt.

Der Sensor ist vorzugsweise eine 3D-Kamera. Eine 3D-Kamera kann jede bekannte Technik verwenden, wie ein Triangulationsprinzip, bei dem zwei Kamerabilder einer bewegten Kamera oder einer Stereokamera untereinander beziehungsweise ein Kamerabild mit einem bekannten Projektionsmuster korreliert und Disparitäten geschätzt werden, oder ein Lichtlaufzeitprinzip mit direkter Laufzeitmessung von Lichtsignalen oder Phasenmessung. Auch ein Laserscanner erzeugt 3D-Punktwolken, die bei einem klassischen Laserscanner auf eine Abtastebene beschränkt sind. Durch in

4

Elevation bewegte Abtastung oder mehrere in Elevation versetzte Abtaststrahlen entfällt diese Beschränkung bei einem Laserscanner.

Bevorzugt wird für alle Paare von Gefahrenstellenpositionen und Objektpositionen ein Abstandswert und der kürzeste Abstand als das Minimum dieser Abstände bestimmt. Die jeweiligen Berechnungen für die unterschiedlichen Paare können nacheinander und/oder parallel durchgeführt werden. Es ist auch möglich, die Paare vorab zu beschränken. Dann wird der Pool aller Paare durch die beschränkten Paare gebildet. Bei durch die Position des Sensors bekannter Perspektive der Erfassung lässt sich unter Umständen für manche Objekte sehr schnell und ohne konkrete Berechnungen entscheiden, dass sie nicht als Objekte mit kürzestem Abstand zu der Maschine in Frage kommen.

Die Steuer- und Auswertungseinheit ist bevorzugt dafür ausgebildet, die Maschine mit mindestens einer Gefahrenstelle zu umhüllen. Nach dem bisherigen Verständnis ist die Maschine selbst die Gefahrenstelle. Es gibt aber verschiedene Gründe, nicht die physischen Abmessungen der Maschine direkt als Gefahrenstelle zu verwenden. Beispielsweise kann es sinnvoll sein, Bereiche der Maschine mit einem Puffer zu umgeben, der Aufenthaltsbereiche während des Prozessablaufs berücksichtigt, oder starre Maschinenteile, von denen keine Gefahr ausgeht, aus der Gefahrenstelle auszunehmen. Durch das Umhüllen lässt sich auch eine komplexe Geometrie der Maschine auf eine einfache Geometrie beispielsweise eines Quaders oder einer Kugel reduzieren.

Dann wird der kürzeste Abstand womöglich etwas überschätzt, um dafür die Modellierung und die Berechnungen zu vereinfachen, was aber die Sicherheit nicht beeinträchtigt, sondern nur die Verfügbarkeit etwas reduziert.

Der erfindungsgemäße Sensor kann vorzugsweise mehrere Gefahrenstellen überwachen. Dadurch werden mehrere Maschinen überwacht. Außerdem besteht die Möglichkeit, verschiedene Bereiche derselben Maschine als mehrere Gefahrenstellen anzusehen, um sämtliche relevanten Gefahren durch möglichst wenige, kleine und einfache Hüllkörper zu erfassen, statt dafür einen einzigen, unnötig großen Hüllkörper zu benötigen. Bei Überwachung mehrerer Gefahrenstellen wird vorzugsweise für jede Gefahrenstelle ein kürzester Abstand an der Ausgabeschnittstelle bereitgestellt, um die Gefahrensituation separat betrachten zu können.

Die Steuer- und Auswertungseinheit ist bevorzugt dafür ausgebildet, Objektpositionen innerhalb von Gefahrenstellen zu ignorieren. Die Gefahrenstelle selbst wird also als frei von zu erfassenden Objekten angesehen, oder vielmehr als durch die Maschine blockiert. Tatsächlich wäre je nach Hüllkörper, der die Maschine als Gefahrenstelle modelliert, durchaus Raum für solche Objekte. Auch bildet die Maschine natürlich selbst ein Objekt, das zunächst von dem Sensor erfasst wird. All das wird aber absichtlich ignoriert und die Gefahrenstelle als leerer, von Objekten freier Block modelliert. Das vereinfacht die Überwachung und die Bestimmung kürzester Abstände, denn die Dynamik der Maschine innerhalb der Gefahrenstelle spielt so keine Rolle. Sicherheitstechnisch ist dies auch unproblematisch, denn jedes Objekt wird rechtzeitig erkannt, wenn es sich der Gefahrenstelle nähert.

Die Steuer- und Auswertungseinheit ist bevorzugt dafür ausgebildet, wechselnde Gefahrenstellen zu überwachen, insbesondere für verschiedene Maschinenzustände innerhalb eines Prozessablaufs. Im Prinzip wäre es wie schon angesprochen denkbar, die Gefahrenstelle großzügig zu definieren, so dass sie alle Maschinenpositionen während des Prozessablaufs abdeckt. Wechselnde Gefahrenstellen können aber viel kleiner bleiben, da nur derjenige Teil der Maschinenpositionen umfasst ist, den die Maschine tatsächlich einnehmen kann, während eine bestimmte wechselnde Gefahrenstelle aktiv ist.

Die Steuer- und Auswertungseinheit ist bevorzugt dafür ausgebildet, mindestens eine Zusatzinformation an der Ausgabeschnittstelle bereitzustellen, wobei die Zusatzinformation mindestens einen weiteren kürzesten Abstand zu anderen Abschnitten des nächsten Objekts oder anderen Objekten, eine Objektposition, eine Bewegungsrichtung, eine Geschwindigkeit, eine Objekthülle oder eine Objektwolke aufweist. Damit wird der angeschlossenen Steuerung eine differenzierte Auswertung ermöglicht. Es ist beispielsweise denkbar, dass nicht ein langsames nächstes Objekt, sondern ein schnelles etwas ferneres Objekt die größte Gefahr darstellt. Der mindestens eine zusätzliche kürzeste Abstand sollte ein anderes Objekt oder zumindest einen klar separierten anderen Objektbereich betreffen, wie einen anderen Arm, da sonst nur unmittelbare Nachbarpunkte zum kürzesten Abstand betrachtet würden, deren Zusatzinformation wenig Neues beiträgt. Objektpositionen sind hier vorzugsweise repräsentativ, etwa ein Objektschwerpunkt oder derjenige Objektpunkt, zu dem der kürzeste Abstand berechnet wurde, und nicht sämtliche bekannten Objektpositionen zu einem Objekt oder dessen Objektpunktewolke. Es ist aber auch denkbar, Hüllkörper zu Objekten oder doch die 3D-Punktwolke des Objekts auszugeben. Bei allen diesen Zusatzinformationen handelt sich jeweils um Zwischenergebnisse, die beim Auffinden des kürzesten Abstands ohnehin erfasst wurden, oder sehr leicht daraus ableitbare Größen, die den Aufwand nicht wesentlich erhöhen.

Der Sensor ist bevorzugt für ein Detektionsvermögen ausgelegt, bei dem Objekte ab einer Mindestgröße sicher erfasst werden, wobei für die Bestimmung des kürzesten Abstands nur Objekte der Mindestgröße berücksichtigt sind. Das Detektionsvermögen ist eine spezifizierte Eignung eines im Sinne der einleitenden oder vergleichbarer Normen sicheren Sensors, Objekte einer Mindestgröße im gesamten Überwachungsbereich sicher zu erfassen. Nur Objekte der Mindestgröße werden für die Bestimmung des kürzesten Abstands berücksichtigt. Die entsprechende Auslegung des Sensors betrifft seinen Aufbau, also seine Optik, seinen Lichtempfänger und weitere mögliche, noch nicht genannte Komponenten wie etwa eine Beleuchtung, und die sichere Auswertung. Das Detektionsvermögen schließt erst einmal nicht aus, dass auch kleinere Objekte erfasst werden. Für Objekte, die kleiner sind als die Mindestgröße, ist aber der Schutz nicht garantiert, beispielsweise wird ein Finger bei einem für Armschutz ausgelegten Sensor nicht sicher erfasst. Deshalb werden Objekte kleiner als die Mindestgröße möglicherweise mittels Filtern in der Auswertung ausgeschlossen. Es ist auch möglich, eine Mindestgröße oberhalb des Detektionsvermögens zu wählen, also eine an sich bereitgestellte Auflösung nicht auszunutzen. Als Zahlenbeispiele seien 10 mm für Fingerschutz oder im Bereich von 30-80 mm für den Schutz von Extremitäten genannt, insbesondere 55 mm für Oberarmschutz.

Die Steuer- und Auswertungseinheit ist bevorzugt dafür ausgebildet, Gefahrenstellen in Form mindestens einer die Maschine überdeckenden Kugel festzulegen und/oder Objekte als Kugeln mit Mittelpunkt an der Position des Objekts und Radius entsprechend der dem Detektionsvermögen entsprechenden Mindestgröße zu modellieren. Das führt zu einem gewissen Unterschätzen von Abständen, da die Maschinenkontur nicht exakt nachgebildet ist, erleichtert aber die Auswertung ganz erheblich. Mit einer größeren Anzahl von Kugeln auch unterschiedlicher Radien lässt sich die Maschine mit praktisch beliebig kleinen Pufferzonen überdecken. Es ist nicht zwingend erforderlich, die gesamte Maschine durch Kugeln zu repräsentieren, sondern nur die gefährlichen Maschinenteile. Unbewegliche Maschinenteile, baulich unzugängliche Bereiche, ein nur langsam bewegtes, leichtes oder weiches Maschinenteil muss nicht unbedingt abgesichert werden. Die Gewinnung einer geeigneten Kugelrepräsentation ist nicht Gegenstand dieser Erfindung. Sie kann beispielsweise direkt von einer Maschinen- oder Robotersteuerung eingelesen werden, welche die Eigenbewegung der Maschine kennt oder überwacht. Denkbar ist auch, die Maschine in den 3D-Bilddaten zu identifizieren und geeignet mit Kugeln zu überdecken. Falls die Maschinenbewegung reproduzierbar ist, kann die Kugelrepräsentation in einem vorbereitenden Schritt gewonnen werden. Auch die Objekte werden bevorzugt als Kugeln mit Mittelpunkt an der Position des Objekts und Radius entsprechend der Mindestgröße modelliert. Falls das Objekt in einer Dimension die Mindestgröße überschreitet, werden dementsprechend mehrere solche Kugeln gebildet. Damit entspricht die objektseitige Repräsentation der bevorzugten Kugelrepräsentation der Maschine und erlaubt eine vereinfachte Auswertung. Die Objektpositionen, zu denen Abstände bestimmt werden, sind dann nicht mehr die gemessenen Objektpositionen, sondern diejenigen der Kugeln.

Die Steuer- und Auswertungseinheit ist bevorzugt dafür ausgebildet, der Gefahrenstelle und/oder dem Objekt für die Bestimmung des kürzesten Abstands deren projektiven Schatten zuzuschlagen. Beim Aufnehmen von 3D-Bilddaten aus einer der Position des Sensors entsprechenden Ursprungsposition verdeckt ein erfasstes Objekt den dahinter liegenden Bereich. Der abgeschattete Bereich entspricht der Projektion des Objekts von der Ursprungsposition ausgehend in die Ferne und wird deshalb als projektiver Schatten bezeichnet. Es lässt sich nicht entscheiden, ob sich dort ein weiteres Objekt verbirgt. Deshalb wird nach dieser Ausführungsform die projektive Verdeckung einbezogen und der projektive Schatten vorsichtshalber dem erfassten Objekt und/oder dem Maschinenteil beziehungsweise der Gefahrenstelle zugeschlagen, also so behandelt, als sei auch der projektive Schatten Teil davon. Auf den ersten Blick erscheint erforderlich, den projektiven Schatten sowohl dem Objekt als auch dem Maschinenteil zuzuschlagen. Es ist auch denkbar, dies zu tun. Wie später noch erläutert, genügt es aber auch, den projektiven Schatten nur entweder für das Maschinenteil oder das Objekt zu berücksichtigen.

Durch die Berücksichtigung der Verdeckung wird eine sichere Gefahren- und insbesondere Personenerkennung ermöglicht. Wie nachfolgend erläutert, können Abstände einschließlich Verdeckung in einem optimierten Ablauf effizient berechnet werden, und zwar insbesondere in einer kostengünstigen Implementierung auf einer CPU, Embedded-Hardware, einem ASIC (Application-Specific Integrated Circuit) oder FPGA (Field Programmable Gate Array) oder Kombinationen davon. Die Berechnungen sind einfach zu parallelisieren, da sie für verschiedene Paare von Maschinenteilen/Gefahrenstellen und Objekten beziehungsweise Teilbereichen davon untereinander unabhängig sind. Es lässt sich eine effiziente Berechnung angeben, die bis auf unvermeidbare numerische Fehler geometrisch exakt bleibt, und es ist sichergestellt, dass der Abstand allenfalls geringfügig unterschätzt, aber niemals überschätzt wird. Damit hat ein Fehler allenfalls geringe Auswirkungen auf die Verfügbarkeit und beeinträchtigt keinesfalls die Sicherheit.

Die Steuer- und Auswertungseinheit ist bevorzugt dafür ausgebildet, projektive Schatten als Kegel zu modellieren. Die Spitze des Kegels ist die Position des Objekts beziehungsweise der Gefahrenstelle, und der Kegelmantel entsteht durch projektive Verlängerung von Strahlen, die in der Ursprungsposition beginnen. Sofern Objekt oder Maschinenteil wie bevorzugt durch Kugeln modelliert sind, ist der projektive Schatten ein Kegelstumpf, der oben in Richtung auf die Ursprungsposition durch die Kugel abgeschlossen ist, und der Kegelstumpf ist der exakte zugehörige projektive Schatten.

Die Steuer- und Auswertungseinheit ist bevorzugt dafür ausgebildet, für die Bestimmung des kürzesten Abstands nur dem Objekt dessen projektiven Schatten zuzuschlagen, wenn das Objekt sich näher an dem Sensor befindet als die Gefahrenstelle, und umgekehrt nur der Gefahrenstelle deren projektiven Schatten zuzuschlagen, wenn sich die Gefahrenstelle näher an dem Sensor befindet. Der projektive Schatten wird demnach innerhalb eines Paares Objekt und Gefahrenstelle nur für den näheren Partner berücksichtigt. Das ist keine Näherung, sondern eine Verringerung des Aufwands.

Der unberücksichtigte Schatten liegt, wie sich aus geometrischen Überlegungen ergibt, stets in einem größeren Abstand.

Die Steuer- und Auswertungseinheit ist bevorzugt dafür ausgebildet, für die Bestimmung des kürzesten Abstands den jeweils näheren Partner eines Paares aus Gefahrenstelle und Objekt in Form einer ersten Kugel samt Kegel als projektiver Schatten und den ferneren Partner als zweite Kugel zu modellieren. Dabei bezieht sich näher und ferner auf die Ursprungsposition des Sensors. Damit vereinfacht sich das Problem auf die Abstandsbestimmung zwischen einfachen geometrischen Körpern. Das Ergebnis bleibt auch richtig, wenn der fernere Partner ebenfalls mit einem Kegel modelliert wird, aber die Abstandsbestimmung wird dadurch nicht genauer und unnötig aufwändig.

Während der Abstandsbestimmung wird bevorzugt zunächst der fernere Partner als Punkt betrachtet und dies später durch Abziehen des Radius' der zweiten Kugel kompensiert. Das erleichtert die Berechnung weiter, die dabei wegen der Kugeleigenschaften exakt bleibt.

Die Steuer- und Auswertungseinheit ist bevorzugt dafür ausgebildet, für die Bestimmung des kürzesten Abstands eine Schnittebene zu verwenden, die durch die Position des Sensors, den Mittelpunkt der ersten Kugel und den Mittelpunkt der zweiten Kugel festgelegt ist. Die drei Punkte definieren eine eindeutige Ebene, in der immer noch sämtliche relevanten Informationen darstellbar sind. Damit wird die Abstandsbestimmung zu einem nur noch zweidimensionalen und wesentlich besser handhabbaren Problem. Der Mittelpunkt der ersten Kugel und der Mittelpunkt der zweiten Kugel werden vorzugsweise in die Schnittebene projiziert, während die Ursprungsposition ohne Beschränkung der Allgemeinheit zur rechnerischen Vereinfachung auch den Koordinatenursprung bildet.

In der Schnittebene wird vorzugsweise eine Tangente von der Ursprungsposition an eine Projektion der ersten Kugel in die Schnittebene betrachtet. Die Tangente wird betrachtet, die Berechnungen gehen also von der Modellvorstellung einer solchen Tangente aus, eine tatsächliche Berechnung oder gar Darstellung der Tangente ist dagegen nicht erforderlich. Die Projektion der ersten Kugel ergibt einen Kreis. Eigentlich gibt es zwei Tangenten durch die Ursprungsposition an diesen Kreis, die auch beide betrachtet werden können, aber nicht müssen, da wie im nächsten Absatz erläutert immer nur eine Tangente für den gesuchten Abstand in Frage kommt.

Vorzugsweise wird nur die Tangente betrachtet, die näher an dem Mittelpunkt der zweiten Kugel liegt. Das sieht auf den ersten Blick nach einer banalen, aber nicht leicht zu erfüllenden Forderung aus, denn natürlich kann die fernere Tangente nicht den gesuchten kürzesten Abstand liefern, es ist aber a priori nicht bekannt, welche ferner liegt. Tatsächlich sind aber in der gewählten Schnittebene die nähere und fernere Tangente sofort anhand ihres Steigungsverhaltens unterscheidbar, insbesondere hat die nähere Tangente in den konkreten Koordinaten des später erläuterten Ausführungsbeispiels immer eine negative und die fernere Tangente eine positive Steigung.

Vorzugsweise wird anhand des Lots vom Mittelpunkt der zweiten Kugel auf die Tangente unterschieden, ob der kürzeste Abstand zu der ersten Kugel oder zu deren projektivem Schatten vorliegt. Es wird demnach eine Fallunterscheidung vorgenommen, ob die das Objekt beziehungsweise Maschinenteil modellierende Kugel selbst oder deren projektiver Schatten den kürzesten Abstand haben. Das Unterscheidungskriterium ist, ob der Fußpunkt des Lots hinter oder vor dem Berührungspunkt der Tangente mit dem Kreis liegt. Ist nach der Fallunterscheidung die Kugel selbst maßgeblich, so wird der Abstand der Mittelpunkte mit Abziehen der Radien gebildet. Ist es der projektive Schatten, so wird der Abstand zwischen Mittelpunkt der zweiten Kugel und dem schon bekannten Fußpunkt des Lots auf die Tangente herangezogen.

Vorzugsweise ist eine Anordnung aus mindestens einem erfindungsgemäßen Sensor und einer Steuerung vorgesehen, die an die Ausgabeschnittstelle und die abgesicherte Maschine angeschlossen ist, wobei die Steuerung dafür ausgebildet ist, von dem Sensor bereitgestellte kürzeste Abstände auszuwerten und erforderlichenfalls eine sicherheitsgerichtete Reaktion einzuleiten. Die Steuerung ist dem Sensor und der überwachten Maschine oder den überwachten Maschinen übergeordnet, oder es handelt sich um die Steuerung der Maschine selbst. Die Steuerung wertet die von dem Sensor gelieferten Abstände auf und leitet gegebenenfalls eine sicherheitsgerichtete Reaktion ein. Beispiele für eine Absicherung sind ein Nothalt, ein Abbremsen, ein Ausweichen oder ein Verbringen in eine sichere Position. Es ist denkbar, einen festen Mindestabstand vorzugeben, der etwa unter worst-case-Annahmen an Geschwindigkeiten oder aus bekannten oder vermessenen Nachlaufwegen bestimmt ist. Es sind auch dynamische Sicherheitsabstände unter anderem in Abhängigkeit von der aktuellen Geschwindigkeit der Maschine und des Objekt denkbar. In die Sicherheitsbewertung können Daten der Steuerung der Maschine einfließen.

Die Anordnung weist bevorzugt mehrere Sensoren auf, die einander in ihren Überwachungsbereichen und/oder ihrer Perspektive ergänzen. Die Objektpositionen werden so aus mindestens zwei Ursprungspositionen bestimmt. Ein möglicher Vorteil ist, durch gegenseitige Ergänzung einen insgesamt größeren Überwachungsbereich zu erfassen. Außerdem sind unterschiedliche Perspektiven hilfreich, indem in überlappenden Bereichen Abstände mit den unterschiedlichen projektiven Schatten zunächst separat bestimmt und anschließend ein gemeinsamer kürzester Abstand gefunden wird. Zwar berücksichtigt die Erfindung die Verdeckung in sicherer und angemessener Weise, kann aber die Überwachungsbeschränkung durch Verdeckung nicht an sich aufheben. Bei Aufnahme aus mehreren Perspektiven verschwinden nach gemeinsamer Auswertung die projektiven Schatten oder werden jedenfalls deutlich kleiner. Um diese gemeinsame Auswertung besonders einfach zu halten, werden die Abstände zunächst in den Objektpositionen aus unterschiedlichen Ursprungspositionen separat bestimmt, und erst anschließend werden die kürzesten Abstände gesucht. Auf diese Weise bleibt die Auswertung entkoppelt, parallelisierbar und gut handhabbar. Prinzipiell könnte man Objektpositionen oder Empfangssignale, insbesondere 3D-Punktewolken, auch früher in der Verarbeitungskette fusionieren und dadurch die projektiven Schatten direkt eliminieren oder verkleinern. Das ist aber ungleich komplexer.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische dreidimensionale Darstellung einer 3D-Kamera und ihres Überwachungsbereich;

Fig. 2    eine beispielhafte Überwachungssituation mit mehreren Gefahrenstellen und Objekten;

Fig. 3    eine schematische Darstellung des Überwachungsbereichs mit als Kugel modellierten Maschinenteilen und Objekten sowie deren projektiven Schatten;

Fig. 4    ein beispielhaftes Ablaufdiagramm zur Bewertung der Positionen von Objekten zu Maschinenteilen;

Fig. 5    ein beispielhaftes Ablaufdiagramm zur Bestimmung des Abstands zwischen einem Objekt und einem Maschinenteil unter Berücksichtigung von projektiven Schatten;

Fig. 6    eine erläuternde Skizze einer Schnittebene zur Berechnung des Abstands; und

Fig. 7    eine weitere erläuternde Skizze zur Berechnung des Abstands innerhalb der Schnittebene.

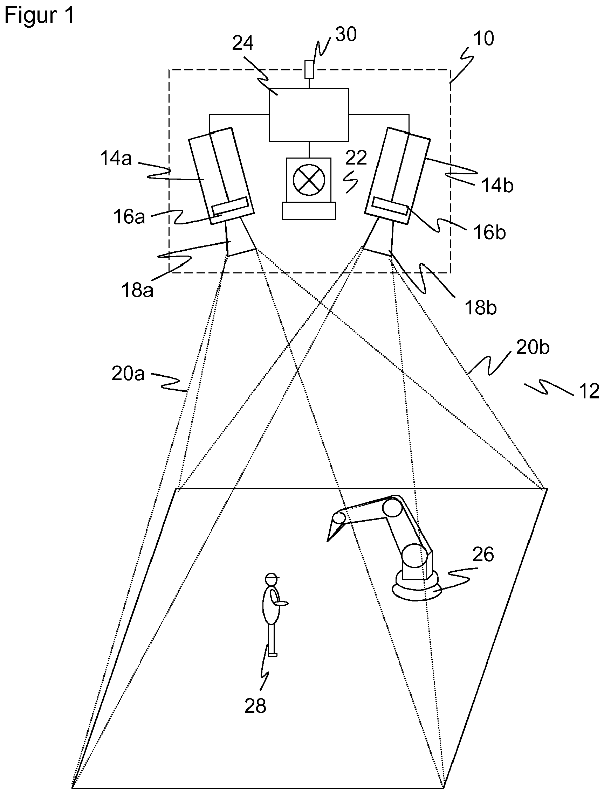

Figur 1 zeigt in einer schematischen dreidimensionalen Darstellung den allgemeinen Aufbau einer Stereokamera 10 zur Aufnahme einer Tiefenkarte. Die Stereokamera 10 ist nur ein Beispiel für einen erfindungsgemäßen Sensor, an dem die Erfassung von 3D-Bilddaten erläutert wird. Ebenso denkbar wären unter anderem die einleitend genannten anderen 3D-Kameras mit Bestimmung der Lichtlaufzeit oder einer Auswertung der Störung passiver zweidimensionaler Muster oder mit Korrelation von Bild und projizierten Beleuchtungsmustern sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Steuer- und Auswertungseinheit 24 prüft, wo sich ein Objekt 28, dargestellt als Person, in Bezug auf die Maschine 26 befindet. Über eine sichere Schnittstelle 30 wird ein kleinster Abstand eines Objekts 28 zu der Maschine 26 ausgegeben, entweder direkt an die Maschine 26 oder an eine Zwischenstation wie eine sichere Steuerung. Die Stereokamera 10 ist vorzugsweise fehlersicher im Sinne von Sicherheitsnormen wie den einleitend genannten ausgelegt.

Die an die sichere Schnittstelle 30 angeschlossene Steuerung, sei es eine übergeordnete Steuerung oder diejenige der Maschine 26, wertet den kürzesten Abstand aus. Im Gefährdungsfall wird eine sicherheitsgerichtete Reaktion eingeleitet, um beispielsweise die Maschine 26 anzuhalten, abzubremsen oder ausweichen zu lassen. Ob dies erforderlich ist, kann neben dem kürzesten Abstand von weiteren Bedingungen wie den Geschwindigkeiten oder der Beschaffenheit von Objekt 28 und Maschinenbereich 26 der drohenden Kollision abhängen.

Nachfolgend wird nun im Detail erläutert, wie mit dem Sensor 10 eine Abstandsüberwachung ermöglicht wird, beispielsweise für eine Mensch-Roboter-Kollaboration unter Berücksichtigung von DIN EN ISO 10218 beziehungsweise ISO/TS 15066. Ausgangspunkt sind die Positionen der Maschinenteile der Maschine 26, jedenfalls soweit diese sicherheitsrelevant sind, beziehungsweise auf dieser Basis definierte Gefahrenstellen, die gegebenenfalls anhand von Reaktions- und Anhaltezeit oder anderen Kriterien erweitert sind, sowie die von der Stereokamera 10 erfassten Objekte 28. Letzteres liegt beispielsweise in Form einer 2D-Detektionskarte vor, deren Pixel an Positionen, in denen ein Objekt 28 einer Mindestgröße erfasst wurde, der dazu gemessene Entfernungswert eingetragen ist, und die sonst leer bleibt. Mit Hilfe dieser Objektdetektionen, die natürlich auch anders repräsentiert sein können, werden der jeweilige und insbesondere der kürzeste Abstand zu der Maschine 26 berechnet, die eine vorzugsweise auch dynamische Gefahrenstelle bildet. Abhängig von dem Abstand erfolgt dann gegebenenfalls durch eine an der sicheren Schnittstelle 30 angeschlossene Steuerung eine Absicherung, die wie mehrfach erwähnt auch in einem Ausweichen oder Verlangsamen bestehen kann.

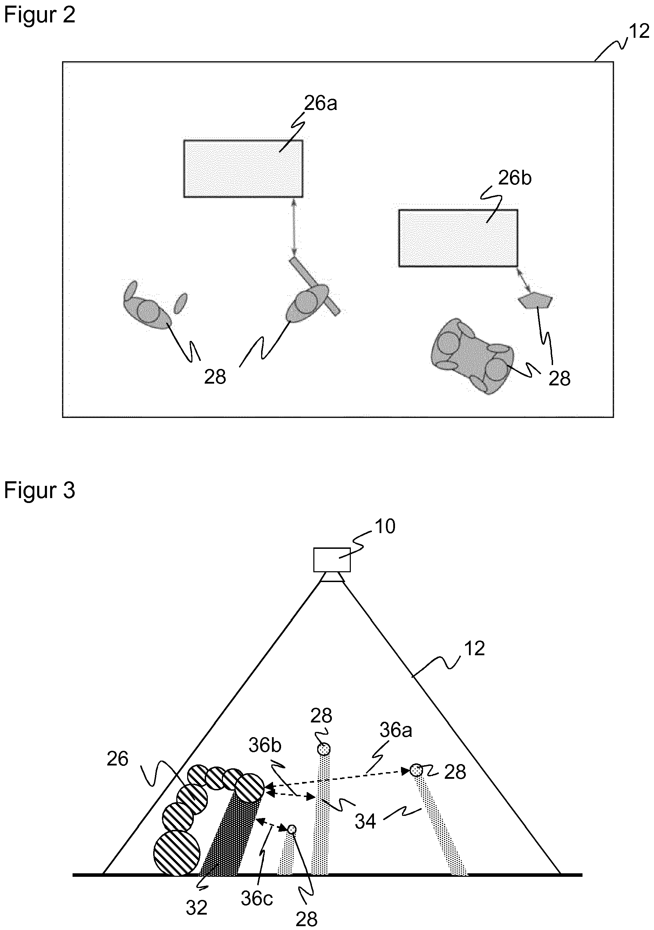

Figur 2 zeigt eine Überwachungssituation in dem Überwachungsbereich 12. Die Absicherungsaufgabe auf Basis des Sensors 10 besteht darin, die Anwesenheit von Menschen, hier einfach definiert als Objekte 28 einer bestimmten Mindestgröße, zu erkennen und abhängig von deren Position und gegebenenfalls weiterer Größen sowie dem aktuellen Maschinenzustand sicherheitsgerichtet eine definierte Reaktion einzuleiten, so dass jederzeit die Sicherheit der Menschen gewährleistet ist.

In diesem Beispiel sind zwei Gefahrenstellen 26a-b zu überwachen, also Maschinenbereiche oder Maschinen, und derzeit sind von dem Sensor 10 in deren Umgebung vier Objekte 28 erkannt. Zwei der Objekte 28 sind, ohne dass der Sensor 10 diese Information explizit gewinnen muss, einzelne Personen, ein weiteres Objekt 28 besteht aus zwei miteinander verschmolzenen Personen, sei es weil sie zusammen ein Werkstück tragen und so tatsächlich verbunden sind oder weil die Segmentierung die beiden Personen nicht trennen konnte. Hinzu kommt noch ein Objekt 28, das nicht näher identifizierbar ist und das ein Gegenstand oder eine Fehlerfassung sein könnte. Fällt es unter die Mindestgröße, so kann es ignoriert werden, ansonsten muss es vorsichtshalber als Person interpretiert werden. Der nicht verbundene Arm der Person ganz links bildet je nach Auswertung ein eigenes weiteres Objekt, oder er wird, insbesondere nach der Lehre der EP 3 200 122 A1, der Person zugeschlagen. Der Sensor 10 liefert Abstandsdaten, damit eine angeschlossene Steuerung durch reduzierte Geschwindigkeit, ein ausweichendes Umplanen der Abläufe oder notfalls rechtzeitigen Stopp der Maschinen in den Gefahrenstellen 26a-b die Personen vor Verletzungen schützt.

Eine Gefahrenstelle 26a-b ist eine bevorzugte Modellierung der gefahrbringenden Maschine 26. Die Gefahrenstelle 26a-b ist ein Raumbereich, in dem die Maschine 26 in einem jeweiligen Zeitabschnitt Arbeitsbewegungen ausführt. Die Gefahrenstelle 26a-b kann die Maschine 26 mit etwas Abstand umgeben, um den Arbeitsbewegungen ausreichend Spiel zu lassen. Außerdem ist es für die Berechnungen vorteilhaft, geometrisch einfache Gefahrenstellen 26a-b wie Quader oder Kugeln zu definieren, wofür dann gewisse Leerräume in Kauf genommen werden. Mehrere Gefahrenstellen 26a-b umgeben mehrere Maschinen 26 und/oder mehrere bewegliche Teilabschnitte einer Maschine 26. Gefahrenstellen 26a-b können starr sein und sämtliche denkbaren Arbeitsbewegungen umfassen. Alternativ sind jeweils Gefahrenstellen 26a-b für Teilabschnitte der Arbeitsbewegung definiert, die in einer dem Prozess entsprechenden Abfolge benutzt werden und die kleiner und besser angepasst sind.

Die Steuer- und Auswertungseinheit 24 berechnet kontinuierlich den kürzesten Abstand des einer jeweiligen Gefahrenstelle 26a-b nächsten Objekts 28. In Figur 2 sind Pfeile eingezeichnet, welche in der aktuellen Situation der Figur 2 die beiden kürzesten Abstände bezüglich der beiden Gefahrenstellen 26a-b darstellen. Der kürzeste Abstand verbindet den nächsten Punkt einer Gefahrenstelle 26a-b mit dem nächsten Punkt des nächsten Objekts 28. Bei dieser Darstellung ist angenommen, dass das kleine Objekt 28 rechts unten die Mindestgröße überschreitet. Andernfalls würde es ignoriert und stattdessen der Abstand zu den beiden verschmolzenen Personen ausgegeben, die das zweitnächste Objekt 28 bilden.

Der jeweils zuletzt bezüglich einer Gefahrenstelle 26a-b ermittelte kürzeste Abstand wird zyklisch oder azyklisch an der sicheren Schnittstelle 30 bereitgestellt. Typische Ausgaberaten sind mehrmals pro Sekunde, es ist aber auch eine seltenere Aktualisierung denkbar, je nach geforderter und möglicher Ansprechzeit des Sensors 10. Eine an der sicheren Schnittstelle 30 angeschlossene übergeordnete Steuerung, insbesondere diejenige der Maschine 28, plant erforderlichenfalls abhängig von dem kürzesten Abstand den nächsten Arbeitsschritt neu, so dass durchgehend der erforderliche Sicherheitsabstand zwischen Mensch und Maschine gewahrt bleibt.

Vorzugsweise bestimmt die Steuer- und Auswertungseinheit 24 auch eine Geschwindigkeit des Objekts 28, zu dem der kürzeste Abstand gemessen wurde, und gibt sie mit dem kürzesten Abstand an der sicheren Schnittstelle 30 aus. Damit lässt sich die Gefährdung noch besser differenzieren. Zwar ist in der Regel das nächste Objekt 28 das gefährlichste - oder genaugenommen das am meisten gefährdete. Außerdem kann der Sicherheitsabstand, den die Maschine 26 bei ihrer Bewegungsplanung einhält, auf eine Maximalgeschwindigkeit einer menschlichen Bewegung ausgelegt sein. Trotzdem wird die sicherheitsgerichtet Reaktion der Maschine auf ihre Umgebung am besten angepasst, wenn mehr Informationen über das nächste Objekt 28 und möglicherweise auch weitere Objekte 28 vorliegen. Auch eine Abhängigkeit von dem Eigenzustand und der geplanten Bewegung der Maschine 26, insbesondere Position und Geschwindigkeit von Maschinenteilen oder gar gefährlichen Werkzeugbereichen, ist denkbar, wobei solche Informationen vorzugsweise von der Maschinensteuerung zur Verfügung gestellt werden.

Es gibt eine Reihe von weiteren Messgrößen oder daraus abgeleiteten Größen, welche die Steuer- und Auswertungseinheit 24 zusätzlich zu dem kürzesten Abstand an der sicheren Schnittstelle 30 ausgeben kann, damit sie in die Sicherheitsbetrachtung der dort angeschlossenen Steuerung einfließen können. Die Geschwindigkeit des nächsten Objekts 28, zu dem der kürzeste Abstand gemessen ist, wurde schon diskutiert.

Vorzugsweise werden zusätzliche kürzeste Abstände zu weiteren Objekten 28 oder separaten Objektabschnitten des nächsten Objekts 28 ausgegeben, beispielsweise eines anderen Armes. Ein mögliches Kriterium hier wäre, dass es im selben Objekt noch weitere lokale Abstandsminima gibt, denn die unmittelbaren Nachbarpunkte zum kürzesten Abstand sind uninteressant. Beispielsweise garantiert der Sensor 10 die Überwachung der fünf nächsten Abstände je aktiver Gefahrenstelle 26a-b. Ein sechstes Objekt und weitere Objekte beziehungsweise Objektabschnitte werden nicht mehr berücksichtigt, wobei aber noch eine Zusatzinformation denkbar ist, dass es mehr als fünf Objekte der Mindestgröße im Überwachungsbereich 12 gibt. Die angeschlossene Steuerung kann so auch für weitere zukünftige Gefahrensituationen mit anderen Objekten 28 als dem nächsten Objekt 28 vorplanen. Ein plastisches Beispiel ist ein noch etwas ferneres Objekt 28, das sich einer Gefahrenstelle 26a-b mit großer Geschwindigkeit nähert.

Nicht abschließend sind weitere denkbare Zusatzinformationen die Größe des nächsten Objekts 28, dessen Position in Form eines Schwerpunktes oder des nächsten Punktes, eine Bewegungsrichtung, eine Objekthülle eines das Objekt 28 umgebenden Hüllkörpers oder eine Repräsentation des Objekts 28 insgesamt als Objektwolke, 3D-Punktewolke oder 3D-Voxel-Darstellung.

Mit dem erfindungsgemäßen Sensor 10 kann eine Sicherheitsanwendung wie folgt beschrieben werden. Dieser Ablauf ist nur beispielhaft. Anfangs werden nach geeigneter Montage des Sensors 10 beispielsweise in Vogelperspektive über der abzusichernden Maschine 26 die Gefahrenstellen 26a-b konfiguriert. Alternativ wird ein Sensorverbund montiert, um zusätzlichen Sichtbereich und/oder weitere Perspektiven zu gewinnen. Die Konfiguration selbst geschieht zweckmäßig durch einen Einrichter in einem entsprechenden Softwarewerkzeug, wobei aber auch AR-artige Konfigurationen direkt im Arbeitsraum ähnlich der einleitend genannten EP 2 023 160 B1 denkbar sind, wo auf diese Weise Schutzfelder konfiguriert werden. Es ist denkbar, je Prozessschritt der Maschine 26 einen weiteren Satz von Gefahrenstellen 26a-b zu konfigurieren.

Der Sensor 10 erfasst dann im Betrieb die Objekte 28, die sich jeweils in dem Überwachungsbereich 12 befinden. Die aufgenommenen Tiefenkarten werden mit den Gefahrenstellen 26a-b, die selbst nicht überwacht werden, und gegebenenfalls mit eingelernten Hintergrundobjekten gefiltert. Kleine Störobjekte und Fehlstellen, in denen keine Tiefenwerte erfassbar sind, werden ignoriert. Die Steuer- und Auswertungseinheit 24 segmentiert auf eine hier nicht näher erläuterte Weise die Tiefenkarte, um die Objekte 28 aufzutrennen. Zu solchen Segmentierungen gibt es zahllose Beispiele in der Literatur.

Zwischen jeder Gefahrenstelle 26a-b und jedem Objekt 28 wird dann der Abstand bestimmt. Allgemein muss dazu der Abstand zwischen jeder Objektposition, d.h. jedem Objektpunkt, und jedem Punkt einer Gefahrenstelle 26a-b bestimmt werden. Allerdings können effektivere Verfahren eingesetzt werden, etwa mittels Hüllkörpern, so dass nicht jeder Punkt wirklich betrachtet werden muss, ebenso wie Heuristiken, die manche Objekte 28 schnell als nicht in Frage kommend ausschließen. Weiter unten wird ein besonders effektives Verfahren zum Auffinden des kürzesten Abstands angegeben.

Je nach Ausführungsform bestimmt die Steuer- und Auswertungseinheit 24 zusätzlich zu dem kürzesten Abstand weitere Größen, wie die Geschwindigkeit des Objekts 28 mit dem kürzesten Abstand oder kürzeste Abstände zu weiteren Objekten 28. Der kürzeste Abstand und etwaige Zusatzinformationen werden an der sicheren Schnittstelle 28 bereitgestellt.

Wenn mehrere Sensoren 10 in einem Verbund eingesetzt sind, liest eine an die jeweiligen sicheren Schnittstellen 30 angeschlossene übergeordnete Steuerung die bereitgestellten Daten aus und fusioniert. Wenn die Sensoren 10 anfangs auf ein gemeinsames Weltkoordinatensystem kalibriert sind, ist diese Fusion sehr einfach, da lediglich aus den lokal per Sensor 10 gelieferten kürzesten Abständen je Gefahrenstelle 26a-b der global über alle Sensoren 10 kürzeste Abstand ausgewählt werden muss.

Die übergeordnete Steuerung oder eine daran beziehungsweise direkt an die sichere Schnittstelle 30 angeschlossene Maschinensteuerung verwendet die so gewonnenen kürzesten Abstände je Gefahrenstelle 26a-b, um festzustellen, ob eine Umplanung des aktuellen Arbeitsschrittes oder eines zukünftigen Arbeitsschrittes erforderlich ist, damit der Prozess optimal abläuft und die Sicherheit gewährleistet ist. Nur notfalls besteht die sicherheitsgerichtete Reaktion in einer Abschaltung der Maschine 26.

Die Bestimmung der kürzesten Abstände in der Steuer- und Auswertungseinheit 24 erfolgt vorzugsweise unter Berücksichtigung der projektiven Geometrie im 3D-Raum. Alternativ wäre auch eine 2D-Projektion auf die Sensorbildebene, eine Bodenebene oder eine Zwischenebene denkbar.

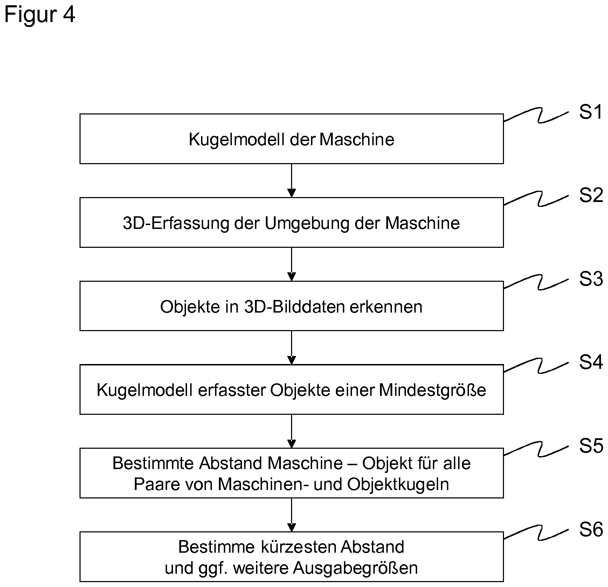

Nachfolgend wird ein vorteilhaftes, besonders effizientes Kugelmodell zur Abstandsberechnung vorgestellt, welches projektive Schatten berücksichtigt. Dazu zeigt Figur 3 eine schematische Seitenansicht des von der Stereokamera 10 überwachten Raumbereichs 12. Figur 4 zeigt ein beispielhaftes Ablaufschema zur Bewertung der Position von Objekten 28 zu der überwachenden Maschine 26 in groben Schritten. Dies erfolgt vorzugsweise in jedem Frame der 3D-Bilddatenerfassung oder jedenfalls mit einer Frequenz, die eine geforderte sicherheitsgerichtete Reaktionszeit gewährleistet.

In einem Schritt S1 wird die Maschine 26 für die weitere Auswertung zur vereinfachten Handhabung durch umhüllende Kugeln repräsentiert. Diese Kugeln überdecken die Maschine 26 oder zumindest diejenigen Maschinenteile, die eine zu überwachende Gefahrenquelle bilden beziehungsweise das daraus abgeleitete gefahrbringende Volumen, also die Gefahrenstelle 26a-b. Dabei muss für die Anzahl von Kugeln eine Abwägung zwischen Aufwand für die Überwachung und Genauigkeit der Approximation gefunden werden. In einigen Ausführungsformen wird die Kugel-Repräsentation der Steuer- und Auswertungseinheit 24 über eine Schnittstelle zugeführt, beispielsweise von anderen Sensoren oder einer Steuerung der Maschine 26, die deren Eigenbewegung kennt beziehungsweise überwacht. Vorzugsweise wird der von der Maschine 26 eingenommene Raum einschließlich seiner Projektion auf die Bildebene der Stereokamera 10 ausmaskiert und nicht betrachtet, um zu vermeiden, dass die Maschine 26 selbst als Objekt 28 erkannt wird.

In einem Schritt S2 wird nun von der Stereokamera 10 der Raumbereich 12 aufgenommen, um 3D-Bilddaten zu gewinnen. In manchen Ausführungsformen wird die Maschine 26 in den 3D-Bilddaten erkannt und daraus eine Kugelrepräsentation abgeleitet, sofern diese Daten nicht anderweitig verfügbar gemacht werden. Dann ist die Abfolge der Schritte S1 und S2 vorzugsweise umgekehrt.

In einem Schritt S3 werden Objekte 28 der Mindestgröße in den 3D-Bilddaten erfasst. Sie sind dann mit ihrer 3D-Position bekannt, beispielsweise in Form einer Detektionskarte wie oben beschrieben.

Die Objekte 28 beziehungsweise deren aus Sicht der Stereokamera 10 sichtbare Oberflächen werden in einem Schritt S4 ebenfalls als Kugel modelliert. Beispielsweise wird jede Position in der Detektionskarte, an der ein Entfernungswert eingetragen und demnach dort ein Objekt 28 der Mindestgröße erfasst ist, mit einer Kugel mit Radius entsprechend der Mindestgröße umhüllt. Für Objekte 28, die größer sind als eine solche Kugel, sind in der Detektionskarte mehrere benachbarte Pixel mit einem Entfernungswert besetzt, so dass dort ineinander geschachtelte Kugeln entstehen, die letztlich das Objekt insgesamt umhüllen. Es ist möglich, in einem Zwischenschritt diejenigen Kugeln zu eliminieren, die von anderen Kugeln überdeckt sind und somit nicht ausgewertet werden müssen.

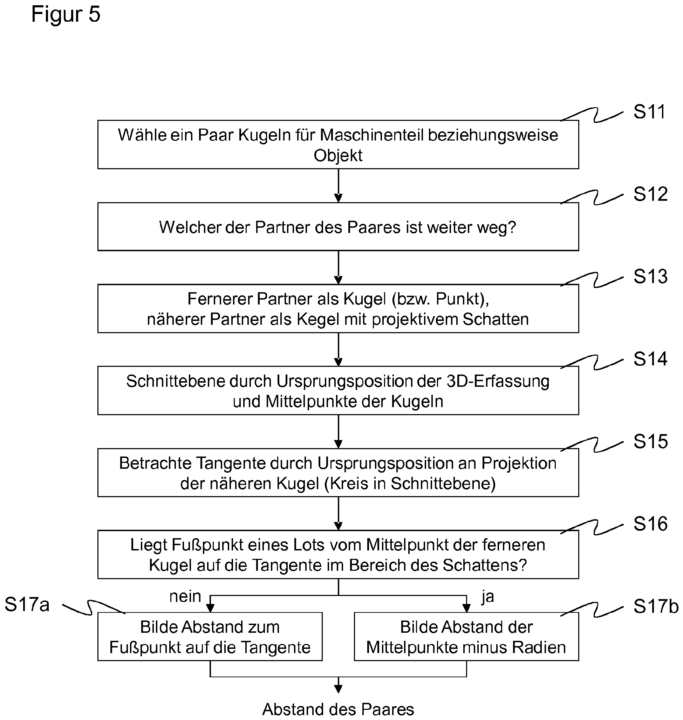

Die Stereokamera 10 berechnet dann in einem Schritt S5, der noch unter Bezugnahme auf die Figuren 5 bis 7 genauer erläutert wird, die Abstände zwischen Maschine 26 und Objekten 28, insbesondere den kürzesten Abstand, um dies für eine sicherheitsgerichtete Reaktion der Maschine 26 verwenden zu können. Folglich müssen Abstände zwischen den Maschine 26 und Objekte 28 repräsentierenden Kugeln berechnet werden.

Wegen der projektiven Verdeckung aus Sicht der Stereokamera 10 genügt dies aber für eine sichere Auswertung noch nicht. Im Schatten 32 der Maschine 26 beziehungsweise dem dafür ausmaskierten Bereich ebenso wie im Schatten 34 der Objekte kann sich ein weiteres Objekt verbergen, das für die Stereokamera 10 nicht erfassbar ist. Sicherheitshalber wird der jeweilige Schatten 32, 34 wie ein Objekt 28 beziehungsweise Teil der Maschine 26 behandelt. Der projektive Schatten, also der aus Sicht der Stereokamera 10 verdeckte Bereich, ist für eine Kugel ein Kegelstumpf, der von Strahlen gebildet wird, die von der Stereokamera 10 ausgehen.

Somit werden aus der Maschine 26 und den Objekten 28 Kugeln mit Übergang in einen Kegelstumpf. Für den kürzesten Abstand ergeben sich dann abhängig von der Lage der Objekte 28 zu der Maschine 26 unterschiedliche Bezugspunkte, beispielsweise ein Abstand 36a zwischen Maschine 26 und Objekt 28, ein Abstand 36b zwischen Maschine 26 und Schatten 34 eines Objekts 28 und ein Abstand 36c zwischen Schatten 32 der Maschine 26 und Objekt 28, und auch ein nicht eingezeichneter Abstand zwischen den Schatten 32, 34 wäre denkbar.

In einem Schritt S6 werden die für alle Paare berechneten Abstände gemeinsam ausgewertet, insbesondere der kürzeste Abstand als das Minimum bestimmt. Die Paare können auch vorab eingeschränkt werden. Ersichtlich kann das Objekt 28 ganz rechts in Figur 3 nicht den kürzesten Abstand zu der Maschine 26 haben. Es ist möglich, entsprechende Heuristiken oder Verfahren vorzuschalten, um die Anzahl der Paare und damit den Aufwand zu beschränken.

Eine mögliche und in vielen Fällen besonders wichtige Ausgabegröße ist der kürzeste Abstand, denn eine typische Sicherheitsbetrachtung fordert, dass stets ein gewisser Abstand zwischen Maschine 26 und Objekten 28 eingehalten ist. Es kann aber auch andere beziehungsweise weitere Ausgabegrößen geben. Beispielsweise werden die n kürzesten Abstände zu der Maschine 26 berechnet und ausgegeben, um mehrere Objekte 28 oder Objektbereiche auszuwerten. Ähnlich ist es möglich, kürzeste Abstände zu mehreren Teilbereichen der Maschine 26 oder mehreren Maschinen parallel zu berechnen und auszugeben. Durch die Kugelrepräsentation besteht zwischen einer einzelnen Maschine 26 und mehreren Maschinen oder Gefahrenstellen kein prinzipieller Unterschied. Es ist aber denkbar, dass unterschiedliche Maschinenbereiche unterschiedlich behandelt werden, etwa wegen eines Gefährdungsgrades. Zu einem Abstand können auch die Koordinaten ausgegeben werden, also die betroffenen Bereiche der Maschine 26 oder Objekte 28 samt approximierter oder in den 3D-Bilddaten erfasster Geometrie, die Berührungspunkte der Abstandslinie oder die Abstandslinie selbst. Auch die Geschwindigkeiten der beteiligten Bereiche der Maschine 26 und Objekte 28 sind zumindest aus mehreren Frames der 3D-Erfassung etwa durch Objekttracking ermittelbar. Je nach sich anschließender Sicherheitsbetrachtung können solche Größen relevant und in beliebiger Kombination berechnet und ausgegeben werden.

Figur 5 zeigt ein beispielhaftes Ablaufdiagramm mit effizienten Einzelberechnungsschritten für die Berechnung des Abstands für ein Paar von Kugeln mit jeweiligem Kegelstumpf. Das kann folglich als konkrete Ausgestaltungsmöglichkeit von Schritt S5 des in Figur 4 gezeigten Ablaufdiagramms verstanden werden.

In einem Schritt S11 wird ein Paar von Kugeln für die Maschine 26 und ein Objekt 28 ausgewählt, deren Abstand unter Berücksichtigung des projektiven Schattens 32, 34 zu berechnen ist. Die komplette Berechnung bleibt geometrisch korrekt, es findet abgesehen von unvermeidlichen numerischen Ungenauigkeiten keine Approximation statt.

Die jeweiligen umhüllenden Kugeln sind mit Hilfe einer Kalibrierung der 3D-Kamera in passende Weltkoordinaten umgerechnet, hier kartesische Koordinaten. Die Kugeln sind mit einem Kegelstumpf verbunden, um den projektiven Schatten zu berücksichtigen. Das sind folglich die Eingangsgrößen einer einzelnen Abstandsbestimmung: Zwei als Zuckerhut zu veranschaulichende geometrische Körper, die aus einem Kugelsegment mit einem sich anschließenden Kegel oder Kegelstumpf bestehen und die geometrisch durch Mittelpunkt und Radius vollständig beschrieben sind, unter Hinzunahme der Position der Stereokamera 10 und der Tatsache, dass die projektiven Schatten 32, 34 in der Ferne prinzipiell ins Unendliche und praktisch bis in die maximale Reichweite der Stereokamera 10 reichen.

In einem Schritt S12 erfolgt eine Vereinfachung für die weitere Berechnung. Es wird geprüft, welcher der beiden Partner des Paares, bezogen auf den jeweiligen Mittelpunkt, weiter von der Stereokamera 10 entfernt ist. Der Mittelpunkt des näheren Partners wird mit *m* bezeichnet, der Mittelpunkt des ferneren Partners mit *p*. Man beachte, dass *m,p* durch diese Festlegungen nicht mehr erkennen lassen, ob sich dort die Maschine 26 oder das Objekt 28 befindet, das geometrische Abstandsproblem ist davon unabhängig.

Nun wird in einem Schritt S13 bei dem ferneren *p* der Kegel weggelassen. Das ist ausreichend, weil die projektive Schatten 32, 34 repräsentierenden Kegel jeweils aus Sicht der Stereokamera 10 in Projektion entstehen und die Entfernungen so von der Stereokamera 10 weg immer größer werden. Es ist also mit anderen Worten unmöglich, dass der kürzeste Abstand zu dem ferneren Schatten 32, 34 besteht. Außerdem genügt es, *p* in der weiteren Berechnung als Punkt zu betrachten. Die Kugel kann nämlich am Ende sehr einfach durch Abziehen ihres Radius' von dem berechneten Abstand berücksichtigt werden. Bei dem näheren *m* dagegen bleibt es bei einer Kugel, die mit einem Kegelstumpf verbunden ist.

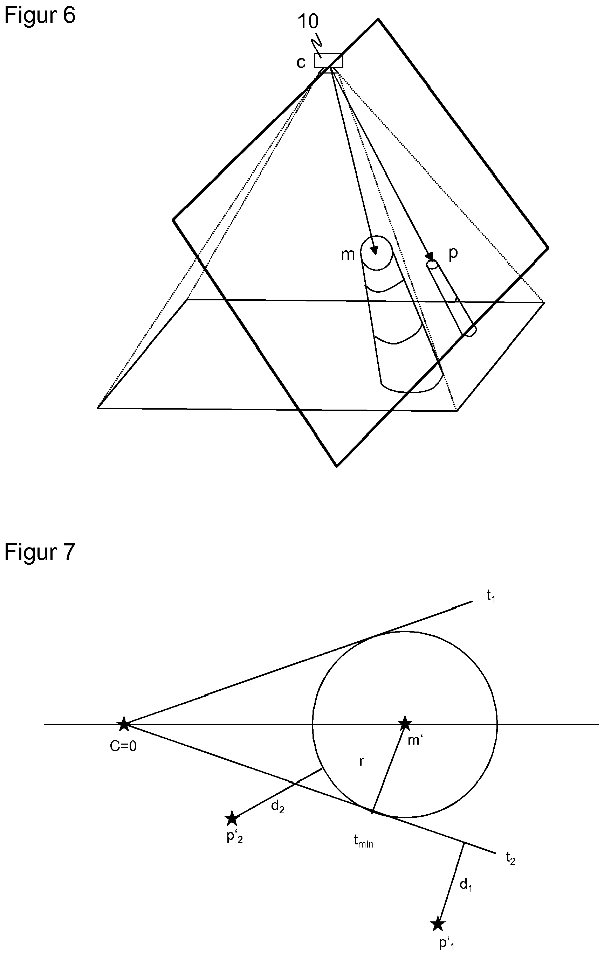

In einem Schritt S14 wird nun das dreidimensionale Problem auf ein zweidimensionales Problem projiziert. Figur 6 illustriert, wie dazu eine Schnittebene durch die drei Punkte c, m, p gelegt wird. Dabei ist c die Position der Stereokamera 10, die ohne Beschränkung der Allgemeinheit in den Koordinatenursprung gelegt wird, $c = (0,0,0)^T$.

Diese Schnittebene soll nun erfasst werden. Da sie durch den Ursprung *c* geht, ist mit der Ebenen-Normale $n = m \times p$ die Ebenengleichung $n_1 x + n_2 y + n_3 z = 0$. In der Schnittebene wird ein Koordinatensystem aus zwei Normalenvektoren $e_1, e_2$ bestimmt. Dabei ist für die weitere Berechnung die folgende Aufteilung vorteilhaft:

$$e_1 = \frac{m}{\|m\|},$$

$$e_2 = \frac{\varepsilon}{\|\varepsilon\|},$$

$$\varepsilon = m \times n = m \times (m \times p) = m\,(m \cdot p) - p\,\|m\|^2.$$

Die beiden Normalenvektoren $e_1, e_2$ spannen also ein kartesisches Koordinatensystem innerhalb der Schnittebene auf, mit $e_1$ in Richtung *m* und $e_2$ senkrecht dazu.

Aus den beiden Vektoren lässt sich dann eine 2x3 Projektionsmatrix bilden, die *m,p* in die 2D-Schnittebene projiziert: $m' = (m,0)^T$, $c' = (0,0)^T$ sowie *p'* aus der Projektion mit der Projektionsmatrix *E*: *p'* = *Ep* mit $E = \begin{pmatrix} e_1^T \\ e_2^T \end{pmatrix}$ bzw:

$p'_x = e_1 p$ und $p'_y = e_2 p$.

Figur 7 illustriert die Situation in der Schnittebene. Die Kugel um *m* wird zu einem Kreis um *m'* mit Radius *r*, und der Verdeckungskegel wird durch die Tangenten $t_1, t_2$ an diesen Kreis durch den Ursprung *c* festgelegt, welche die Kegelflächen in der Schnittebene repräsentieren.

In einem Schritt S15 werden diese Tangenten betrachtet. Die Tangentengleichungen in Steigungsform sind

$$t_{1,2}: y = s_{1,2}\, x \Rightarrow s_1 = \frac{y}{x} = \tan\alpha \quad (\text{Wg. Symmetrie: } s_2 = -s_1)$$

mit $\alpha = \sin\left(\frac{r}{m}\right) \Rightarrow s_1 = \tan\left(\text{asin}\left(\frac{r}{m}\right)\right) = \frac{r/m}{\sqrt{1 - r^2/m^2}}$. Sei noch $\gamma := \frac{m}{r}$ das Verhältnis von Kameraabstand zu Radius r, $\gamma \geq 1$.

Dann ist die Steigung der Tangenten $s_{1,2} = \pm\frac{1}{\sqrt{\gamma^2 - 1}}$ und damit die Tangentengleichung

$$t_{1,2}: y = \pm\frac{1}{\sqrt{\gamma^2 - 1}}\, x.$$

Konkret benötigt wird der nächste Punkt auf der Tangente zum Punkt **p** beziehungsweise seine Parametrierung entlang der Tangente. In Figur 7 sind zwei verschiedene Punkte **p'**$_1$, **p'**$_2$ gezeigt, die unterschiedlichen möglichen Lagen von **p** entsprechen.

Aus der Punkt-Steigungsform der Tangentengleichung lässt sich einfach die Hesse-Normalform ableiten, mit welcher direkt der Abstand eines Punktes **p'** zu den Geraden berechnet werden kann. Allerdings wird hier auch der nächste Punkt auf der Geraden zu $\mathbf{p'} = (p_x, p_y)^T$ benötigt ("Lotfußpunkt"), dazu ist die Vektorform praktikabler.

Aus der Tangentengleichung folgt $\pm x = \sqrt{\gamma^2 - 1}\, y$ und damit für die Tangenten der jeweilige Richtungsvektor $\mathbf{a}_{1,2} = \begin{pmatrix} \sqrt{\gamma^2 - 1} \\ \pm 1 \end{pmatrix}$.

Die Tangentengleichung in Vektorform beschreibt einen beliebigen Punkt auf der Geraden über den freien Parameter t, insbesondere auch zwei potentielle Lotfußpunkte $\mathbf{l}_{1,2} : \begin{pmatrix} x \\ y \end{pmatrix} = t \begin{pmatrix} \sqrt{\gamma^2 - 1} \\ \pm 1 \end{pmatrix}$.

Die Vektoren $\mathbf{b}_{1,2} := \mathbf{p'} \to l_{1,2}$ sind der Verbindungsvektor von p' zum Lotfußpunkt jeder Tangente:

$$\mathbf{b}_{1,2} = \begin{pmatrix} \sqrt{\gamma^2 - 1} \cdot t \\ \pm t \end{pmatrix} - \mathbf{p'}.$$

Das Lot muss senkrecht auf den Richtungsvektor stehen, d.h. $\mathbf{a}_i \cdot \mathbf{b}_i = 0$ für i=1,2.

Daraus ergeben sich die folgenden Lösungen für t: $t_{1,2} = \frac{p_x \sqrt{\gamma^2 - 1} \pm p_y}{\gamma^2}$.

Nun liegt durch das mit $e_1$, $e_2$ aufgespannte Koordinatensystem **p'** immer im negativen y / positiven x-Quadranten, was sich aus der Reihenfolge der Vektoren im Kreuzprodukt ergibt. Das bedeutet aber, dass immer die absteigende Tangente $t_2$ die nähere ist. Die Tangente $t_1$ wird vorzugsweise nicht betrachtet, was die Berechnung im Betrieb erleichtert.

Durch die Filterung von Tiefenwerten in der Vorverarbeitung liegt zudem kein Objekt 28 in der Maschine 26 oder deren Schatten, entsprechende Detektionen wurden ausmaskiert. Daher kann ausgeschlossen werden, dass sich **p** im Kegel befindet. Außerdem sind alle Größen auf den Bereich gültiger Tiefenwerte begrenzt, liegen also im überwachten Raumbereich 12.

Nach der Berechnung von $t = \frac{r^2}{m^2}\left(p_x \sqrt{\frac{m^2}{r^2} - 1} - p_y\right)$ werden die Werte mit den minimal zulässigen Werten verglichen. Diese legen den gültigen Bereich des Kegelmantels fest.

Der minimale Wert $t_{min}$ für die Tangente ergibt sich durch Einsetzen des Kreismittelpunktes in $\mathbf{p'} = \begin{pmatrix} m \\ 0 \end{pmatrix}$:

$$t_{min} = \frac{r^2}{m}\sqrt{\frac{m^2}{r^2} - 1}\,.$$

In einem Schritt S16 wird nun eine Fallunterscheidung vorgenommen. Je nachdem, welcher der dargestellten

Punkte $p'_1, p'_2$ der Lage von $p$ entspricht, besteht der kürzeste Abstand zu der Tangente oder zu dem Kreis. Anschaulich entspricht die Tangente dem Schatten 32, 34 und der Kreis der Maschine 26 oder dem Objekt 28 selbst.

Für einen Punkt in einer Lage wie $p'_1$ ist $t > t_{min}$, und dann wird in einem Schritt S17a der Lotfußpunkt $l$ aus der Tangentengleichung berechnet. Der Abstand ergibt sich aus $d = \|l - p'\|$. Dies wird über die Ebenenvektoren zurück in 3D-Koordinaten transformiert, $l_{3D} = E^T l$ mit $E^T = (e_1\ e_2)$ bzw. $l_{3D} = l_x e_1 + l_y e_2$, wobei $l_x, l_y$ die Koordinaten des nächsten Tangentenpunktes sind. Für den tatsächlichen Abstand muss noch der Radius der Kugel um $p$ abgezogen werden, um die Reduktion der dortigen Kugel auf einen Punkt zu kompensieren.

Ist umgekehrt $t \leq t_{min}$ für einen Punkt in einer Lage wie $p'_2$, so wird statt der Tangente in einem Schritt S17b direkt der Kreis herangezogen. Der Abstand entspricht dann einfach dem Abstand der Mittelpunkte $m, p$ in diesem Fall nach Abzug der Radien beider Kugeln.

Damit ist der Abstand des Paares unter Berücksichtigung der projektiven Schatten in exakter geometrischer Berechnung bekannt.

In vielen Fällen ist die Bewegung der Maschine 26 nicht vollständig frei und dynamisch, sondern zur Einrichtzeit weitestgehend bekannt. Dann muss die Steuer- und Auswertungseinheit 24 den Sensor nicht zur Laufzeit den Abstand neu betrachten, sondern kann für eine Reihe von bekannten Konfigurationen die Abstände zu vielen oder allen möglichen Positionen im Raumbereich 12 etwa in diskretisierter Form von 2D-Pixeladressen und Tiefenwert vorausberechnen. So entsteht in einer Konfigurationsphase eine Look-Up-Table, die eine sehr schnelle Auswertung zur Laufzeit erlaubt.

In einer weiteren Ausführungsform wird die Maschine 26 nicht mit ihrem Verdeckungskegel berücksichtigt, beispielsweise weil das Sicherheitskonzept das nicht erfordert. Die Maschine 26 wird dann als frei schwebende Kugel berücksichtigt, und das Objekt 28 als Kugel mit Verdeckungskegel. Sind dann noch alle Kugeln gleich groß, kann effizienter mit dem quadrierten Abstand gerechnet werden, und das aufwändige Ziehen von Wurzeln entfällt.

Eine weitere Ausführungsform sieht nicht nur eine Stereokamera 10 vor, sondern einen Verbund von mehreren Stereokameras 10. Es wird daran erinnert, dass die Stereokamera 10 nur ein beispielhafter Sensor ist, und ein solcher Verbund kann auch inhomogen sein, d.h. unterschiedliche Sensortypen aufweisen. Jeder Sensor ermittelt den für ihn kürzesten Abstand mit der für ihn geltenden projektiven Verdeckung. Die Abstände werden kombiniert ausgewertet, indem beispielsweise der kürzeste Abstand aus dem Verbund zur sicherheitsgerichteten Auswertung verwendet wird.

**Patentansprüche**

1. Sicherer optoelektronischer Sensor (10), insbesondere 3D-Kamera, zum Absichern eines Überwachungsbereichs (12) mit mindestens einer Maschine (26), die eine Gefahrenstelle (26a-b) bildet, wobei der Sensor (10) einen Lichtempfänger (16a-b) zum Erzeugen eines Empfangssignals aus Empfangslicht aus dem Überwachungsbereich (12), eine Steuer- und Auswertungseinheit (24) zum Erfassen von Objektpositionen (28) in dem Überwachungsbereich (12) aus dem Empfangssignal sowie eine sichere Ausgabeschnittstelle (30) für aus den Objektpositionen (28) gewonnene Informationen aufweist,
**dadurch gekennzeichnet,**
**dass** die Steuer- und Auswertungseinheit (24) dafür ausgebildet ist, den kürzesten Abstand zwischen Gefahrenstelle (26a-b) und Objektpositionen (28) zu bestimmen und an der sicheren Ausgabeschnittstelle (30) bereitzustellen.

2. Sensor (10) nach Anspruch 1,
wobei die Steuer- und Auswertungseinheit (24) dafür ausgebildet ist, die Maschine (26) mit mindestens einer Gefahrenstelle (26a-b) zu umhüllen.

3. Sensor (10) nach Anspruch 1 oder 2,
wobei die Steuer- und Auswertungseinheit (24) dafür ausgebildet ist, Objektpositionen (28) innerhalb von Gefahrenstellen (26a-b) zu ignorieren.

4. Sensor (10) nach einem der vorhergehenden Ansprüche,
wobei die Steuer- und Auswertungseinheit (24) dafür ausgebildet ist, wechselnde Gefahrenstellen (26a-b) zu überwachen, insbesondere für verschiedene Maschinenzustände innerhalb eines Prozessablaufs.

5. Sensor (10) nach einem der vorhergehenden Ansprüche,
wobei die Steuer- und Auswertungseinheit (24) dafür ausgebildet ist, mindestens eine Zusatzinformation an der Ausgabeschnittstelle (30) bereitzustellen,
wobei die Zusatzinformation mindestens einen weiteren kürzesten Abstand zu anderen Abschnitten des nächsten Objekts (28) oder anderen Objekten (28), eine Objektposition, eine Bewegungsrichtung, eine Geschwindigkeit, eine Objekthülle oder eine Objektwolke aufweist.

**6.** Sensor (10) nach einem der vorhergehenden Ansprüche,
wobei der Sensor (10) für ein Detektionsvermögen ausgelegt ist, bei dem Objekte (28) ab einer Mindestgröße sicher erfasst werden, wobei für die Bestimmung des kürzesten Abstands nur Objekte (28) der Mindestgröße berücksichtigt sind.

**7.** Sensor (10) nach Anspruch 6,
wobei die Steuer- und Auswertungseinheit (24) dafür ausgebildet ist, Gefahrenstellen (26a-b) in Form mindestens einer die Maschine (26) überdeckenden Kugel festzulegen und/oder Objekte (28) als Kugeln mit Mittelpunkt an der Position des Objekts (28) und Radius entsprechend der dem Detektionsvermögen entsprechenden Mindestgröße zu modellieren.

**8.** Sensor (10) nach einem der vorhergehenden Ansprüche,
wobei die Steuer- und Auswertungseinheit (24) dafür ausgebildet ist, der Gefahrenstelle (26a-b) und/oder dem Objekt (28) für die Bestimmung des kürzesten Abstands deren projektiven Schatten (32, 34) zuzuschlagen.

**9.** Sensor (10) nach Anspruch 8,
wobei die Steuer- und Auswertungseinheit (24) dafür ausgebildet ist, projektive Schatten (32, 34) als Kegel zu modellieren.

**10.** Sensor nach Anspruch 8 oder 9,
wobei die Steuer- und Auswertungseinheit (24) dafür ausgebildet ist, für die Bestimmung des kürzesten Abstands nur dem Objekt (28) dessen projektiven Schatten (34) zuzuschlagen, wenn das Objekt (28) sich näher an dem Sensor (10) befindet als die Gefahrenstelle (26a-b), und umgekehrt nur der Gefahrenstelle (26a-b) deren projektiven Schatten (32) zuzuschlagen, wenn sich die Gefahrenstelle (26a-b) näher an dem Sensor (10) befindet.

**11.** Sensor (10) nach einem der Ansprüche 8 bis 10,
wobei die Steuer- und Auswertungseinheit (24) dafür ausgebildet ist, für die Bestimmung des kürzesten Abstands den jeweils näheren Partner eines Paares aus Gefahrenstelle (26a-b) und Objekt (28) in Form einer ersten Kugel samt Kegel als projektiver Schatten (32, 34) und den ferneren Partner als zweite Kugel zu modellieren.

**12.** Sensor (10) nach Anspruch 11,
wobei die Steuer- und Auswertungseinheit (24) dafür ausgebildet ist, für die Bestimmung des kürzesten Abstands eine Schnittebene zu verwenden, die durch die Position des Sensors (10), den Mittelpunkt der ersten Kugel und den Mittelpunkt der zweiten Kugel festgelegt ist.

**13.** Anordnung mindestens eines Sensors (10) nach einem der vorhergehenden Ansprüche und einer Steuerung, die an die Ausgabeschnittstelle (30) und die abgesicherte Maschine (26) angeschlossen ist, wobei die Steuerung dafür ausgebildet ist, von dem Sensor (10) bereitgestellte kürzeste Abstände auszuwerten und erforderlichenfalls eine sicherheitsgerichtete Reaktion einzuleiten.

**14.** Verfahren zum Absichern eines Überwachungsbereichs (12) mit mindestens einer Maschine (26), die eine Gefahrenstelle (26a-b) bildet, aus Empfangslicht aus dem Überwachungsbereich (12) ein Empfangssignal erzeugt und ausgewertet wird, um Objektpositionen (28) in dem Überwachungsbereich (12) zu erfassen und wobei aus den Objektpositionen (28) gewonnene Informationen sicher ausgegeben (30) werden,
**dadurch gekennzeichnet,**
**dass** der kürzeste Abstand zwischen Gefahrenstelle (26a-b) und Objektpositionen (28) bestimmt und als sichere Information bereitgestellt (30) wird.

Figur 1

Figur 2

Figur 3

## Figur 4

| Kugelmodell der Maschine | S1 |
| 3D-Erfassung der Umgebung der Maschine | S2 |
| Objekte in 3D-Bilddaten erkennen | S3 |
| Kugelmodell erfasster Objekte einer Mindestgröße | S4 |
| Bestimmte Abstand Maschine – Objekt für alle Paare von Maschinen- und Objektkugeln | S5 |
| Bestimme kürzesten Abstand und ggf. weitere Ausgabegrößen | S6 |

# Figur 5

```
                                                    ⟿  S11
┌────────────────────────────────────────────────┐
│  Wähle ein Paar Kugeln für Maschinenteil        │
│                 beziehungsweise Objekt          │
└────────────────────────────────────────────────┘
                        │
                        ▼                           ⟿  S12
┌────────────────────────────────────────────────┐
│  Welcher der Partner des Paares ist weiter weg? │
└────────────────────────────────────────────────┘
                        │
                        ▼                           ⟿  S13
┌────────────────────────────────────────────────┐
│  Fernerer Partner als Kugel (bzw. Punkt),       │
│  näherer Partner als Kegel mit projektivem      │
│                    Schatten                      │
└────────────────────────────────────────────────┘
                        │
                        ▼                           ⟿  S14
┌────────────────────────────────────────────────┐
│  Schnittebene durch Ursprungsposition der       │
│     3D-Erfassung und Mittelpunkte der Kugeln    │
└────────────────────────────────────────────────┘
                        │
                        ▼                           ⟿  S15
┌────────────────────────────────────────────────┐
│  Betrachte Tangente durch Ursprungsposition an  │
│  Projektion der näheren Kugel (Kreis in         │
│                  Schnittebene)                   │
└────────────────────────────────────────────────┘
                        │
                        ▼                           ⟿  S16
┌────────────────────────────────────────────────┐
│  Liegt Fußpunkt eines Lots vom Mittelpunkt der  │
│  ferneren Kugel auf die Tangente im Bereich     │
│                   des Schattens?                 │
└────────────────────────────────────────────────┘
           nein │                    │ ja
   S17a ⟿  ┌───────────────┐  ┌──────────────────┐  ⟿  S17b
          │  Bilde Abstand │  │  Bilde Abstand der │
          │  zum Fußpunkt  │  │  Mittelpunkte      │
          │  auf die       │  │  minus Radien      │
          │  Tangente      │  │                    │
          └───────────────┘  └──────────────────┘
                        │
                        ▼
              Abstand des Paares
```

## Figur 6

## Figur 7

Europäisches
Patentamt

European
Patent Office

Office européen
des brevets

## EUROPÄISCHER RECHERCHENBERICHT

**Nummer der Anmeldung**

EP 18 17 0726

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FLACCO FABRIZIO ET AL: "A Depth Space Approach for Evaluating Distance to Objects", JOURNAL OF INTELLIGENT AND ROBOTIC SYSTEMS, KLUWER DORDRECHT, NL, Bd. 80, Nr. 1, 24. Oktober 2014 (2014-10-24), Seiten 7-22, XP035913842, ISSN: 0921-0296, DOI: 10.1007/S10846-014-0146-2 [gefunden am 2014-10-24] * das ganze Dokument * ----- | 1,3-6,8, 9,13,14 | INV. B25J9/16 G01S17/42 G01S17/89 |
| X,D | EP 2 947 604 A1 (ROCKWELL AUTOMATION TECH INC [US]) 25. November 2015 (2015-11-25) * Absätze [0025], [0056] - [0059] * * Abbildungen 9A, 9B, 10 * ----- | 1,2,6-8, 11-14 | |
| A | ZUBE ANGELIKA: "Combined workspace monitoring and collision avoidance for mobile manipulators", 2015 IEEE 20TH CONFERENCE ON EMERGING TECHNOLOGIES & FACTORY AUTOMATION (ETFA), IEEE, 8. September 2015 (2015-09-08), Seiten 1-8, XP032797449, DOI: 10.1109/ETFA.2015.7301526 * das ganze Dokument * ----- | 1-14 | |
| A,D | MISEIKIS JUSTINAS ET AL: "Multi 3D camera mapping for predictive and reflexive robot manipulator trajectory estimation", 2016 IEEE SYMPOSIUM SERIES ON COMPUTATIONAL INTELLIGENCE (SSCI), IEEE, 6. Dezember 2016 (2016-12-06), Seiten 1-8, XP033066633, DOI: 10.1109/SSCI.2016.7850237 * das ganze Dokument * ----- -/-- | 1-14 | |

**RECHERCHIERTE SACHGEBIETE (IPC)**

G01S
G06T
G06K
B25J

Der vorliegende Recherchenbericht wurde für alle Patentansprüche erstellt

| Recherchenort | Abschlußdatum der Recherche | Prüfer |
|---|---|---|
| München | 7. November 2018 | Kruck, Peter |

Seite 1 von 2

Europäisches
Patentamt

European
Patent Office

Office européen
des brevets

# EUROPÄISCHER RECHERCHENBERICHT

Nummer der Anmeldung

EP 18 17 0726

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 386 876 A1 (SICK AG [DE]) 16. November 2011 (2011-11-16) * Absätze [0012] - [0048] * * Abbildungen 1-5 * ----- | 1-14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. November 2018 | Kruck, Peter |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 17 0726

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2018

| Im Recherchenbericht angeführtes Patentdokument | Datum der Veröffentlichung | Mitglied(er) der Patentfamilie | Datum der Veröffentlichung |
|---|---|---|---|
| EP 2947604 A1 | 25-11-2015 | CN 105094005 A | 25-11-2015 |
| | | EP 2947604 A1 | 25-11-2015 |
| | | US 2015332463 A1 | 19-11-2015 |
| | | US 2016070991 A1 | 10-03-2016 |
| EP 2386876 A1 | 16-11-2011 | EP 2386876 A1 | 16-11-2011 |
| | | US 2011273723 A1 | 10-11-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2023160 B1
- DE 10152543 A1
- DE 102004043514 A1
- EP 2395274 B1
- DE 102012007242 A1
- EP 2819109 A1
- WO 2010085944 A1
- EP 2947604 A1

- DE 102016004902 A1
- DE 202013104860 U1
- EP 2386876 B1
- US 8249747 B2
- US 9043025 B2
- US 20150217455 A1
- EP 3200122 A1


**In der Beschreibung aufgeführte Nicht-Patentliteratur**

- A depth space approach to human-robot collision avoidance. **FLACCO, FABRIZIO et al.** Robotics and Automation (ICRA), 2012 IEEE International Conference on. IEEE, 2012
- Real-time swept volume and distance computation for self collision detection. **TÄUBIG ; HOLGER ; BERTHOLD BÄUML ; UDO FRESE.** Intelligent Robots and Systems (IROS), 2011 IEEE/RSJ International Conference on. IEEE, 2011

- **LENZ, CLAUS et al.** Fusing multiple kinects to survey shared human-robot-workspaces. Technische Universität München, 2012
- **MISEIKIS, JUSTINAS et al.** Multi 3D Camera Mapping for Predictive and Reflexive Robot Manipulator Trajectory Estimation. *arXiv preprint arXiv:1610.03646,* 2016
- **ZUBE, ANGELIKA.** Combined workspace monitoring and collision avoidance for mobile manipulators. *IEEE 20th Conference on Emerging Technologies & Factory Automation (ETFA),* 2015